# EUROPEAN PATENT SPECIFICATION

(11) **EP 3 211 868 B1**
(45) Date of publication and mention of the grant of the patent: **15.06.2022**
(21) Application number: 16195131.4
(22) Date of filing: 21.10.2016
(51) Int. Cl.: H04M 1/725, H04M 1/2745, H04M 1/57, G06Q 10/08, G06Q 30/00, G06Q 30/06

(54) **METHOD AND DEVICE FOR PROCESSING INFORMATION**
VERFAHREN UND VORRICHTUNG ZUR INFORMATIONSVERARBEITUNG
PROCÉDÉ ET DISPOSITIF DE TRAITEMENT D'INFORMATIONS

(30) Priority: 26.02.2016 CN 201610109885
(43) Date of publication of application: 30.08.2017
(73) Proprietor: Beijing Xiaomi Mobile Software Co., Ltd., Beijing 100085 (CN)
(72) Inventor: WANG, Qian, BEIJING 100085 (CN); ZHU, Yin, BEIJING 100085 (CN); LI, Lan, BEIJING 100085 (CN)
(74) Representative: Cabinet Beau de Loménie

(56) References cited:
- EP-A1- 2 088 551
- EP-A1- 2 933 960
- US-A1- 2009 247 140
- US-A1- 2014 149 308

## Description

### FIELD

The present invention relates to a computer technology, and more particularly relates to a method and a device for processing information.

### BACKGROUND

At present, call logs only record basic information of a call, such as contact information, phone number, incoming call time, calling out time, number of calls and phone number for attribution etc. Only the basic information exists, however, for information of service calls, the information a user wants to know, there is no way to get.

EP 2 088 551 discloses a technology by which a communications identifier such as a telephone number is used in selecting relevant content (112) (e.g., an advertisement) for outputting as audible arid/or visible information to a destination device (104).

EP 2 933 960 discloses a method for processing contact information.

US 2009/247140 discloses a system for providing mobile advertisement actions.

US 2014/149308 discloses a system and method for tracking packages on a client device.

### SUMMARY

Embodiments of the present invention provide a method and a device for processing information. The technical solutions will be described as follows.

The invention is defined by a method according to claim 1, a device according to claim 5, a computer program according to claim 9 and a recording medium according to claim 10. Further embodiments are defined by the dependent claims.

According to a first aspect of embodiments of the present invention, a method for processing information is provided. The method is applied in a terminal, and includes:
obtaining service information related to a service if a service type call log exists in call logs of the terminal; and
inserting the service information into the service type call log and displaying the service information.

According to the invention, obtaining service information related to a service includes:
obtaining the service information related to the service from a background server, in which the service information at least includes progress information of the service.

In a particular embodiment, the method further includes:
obtaining an extended function item related to the service, inserting the extended function item into the service type call log and displaying the extended function item, executed simultaneously with the act of inserting the service information into the service type call log and displaying the service information.

In a particular embodiment, the method further includes:
going to execute the extended function item if a user selects to operate the extended function item in the service type call log.

In a particular embodiment, the service type at least includes: an express delivery service, a take-out service, a taxi-calling service or a ticket-booking service.

In a particular embodiment, the method further includes: arranging a call log corresponding to the service on top of a call log interface by default if the service is in progress.

According to a second aspect of embodiments of the present invention, a device for processing information is provided. The device is applied in a terminal and includes:
an information obtaining module, configured to obtain service information related to a service if a service type call log exists in call logs of the terminal; and
an information displaying module, configured to insert the service information into the service type call log and display the service information.

According to the invention, the information obtaining module is configured to obtain the service information related to the service from a background server, in which the service information at least includes progress information of the service.

In a particular embodiment, the device further includes:
an extended information displaying module, configured to obtain an extended function item related to the service, to insert the extended function item into the service type call log and to display the extended function item, when the service information obtained is inserted into the service type call log and displayed.

In a particular embodiment, the device further includes:
a function executing module, configured to go to execute the extended function item if a user selects to operate the extended function item in the service type call log.

In a particular embodiment, the service type at least includes: an express delivery service, a take-out service, a taxi-calling service or a ticket-booking service.

In a particular embodiment, the information displaying module is further configured to
arrange a call log corresponding to the service on top of a call log interface by default if the service is in progress.

According to a third aspect of embodiments of the present invention, a device for processing information is provided. The device includes:
a processor;
a memory for storing an instruction executable by the processor;
in which the processor is configured to:
   obtain service information related to a service if a service type call log exists in call logs of a terminal; and
   insert the service information into the service type call log and display the service information.

The advantages and features of the system and devices according to the embodiments of the present invention are the same with those of the above described method and will not be repeated here.

In a particular embodiment, the steps of the method for processing information are determined by computer program instructions.

Consequently, according to a fourth aspect, the invention is also directed to a computer program for executing, when this program is executed by a computer, the steps of the method for processing information.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program.

For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to embodiments of the present invention includes the following advantageous effects.

In the technical solution, service information related to the service are obtained if the service type call log exists in call logs of the terminal and the service information obtained are inserted into the service type call log and displayed. With the method, a user may obtain related service information from the call logs without calling other service function to inquire related service information.

It should be understood that the above general descriptions and the following detail descriptions are explanatory and illustrative, and these descriptions shall not be construed to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart of a method for processing information according to an embodiment of the present invention;
Fig. 2 is a flow chart of a method for processing information according to an embodiment of the present invention;
Figs. 3-5 are schematic diagrams illustrating an information processing process according to an embodiment of the present invention;
Fig. 6 is a block diagram of a device for processing information according to an embodiment of the present invention;
Fig. 7 is a block diagram of a device for processing information according to an embodiment of the present invention;
Fig. 8 is a block diagram of a device for processing information according to an embodiment of the present invention; and
Fig. 9 is a block diagram of a device for processing information according to an embodiment of the present invention.

Embodiments of the present invention are illustrated in the above accompany drawings and will be described in further detail hereinafter. These accompany drawings and literal description are not intended to limit the scope of the idea of the present invention, but to explain the principle of the present invention with reference to particular embodiments for those skilled in the art.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

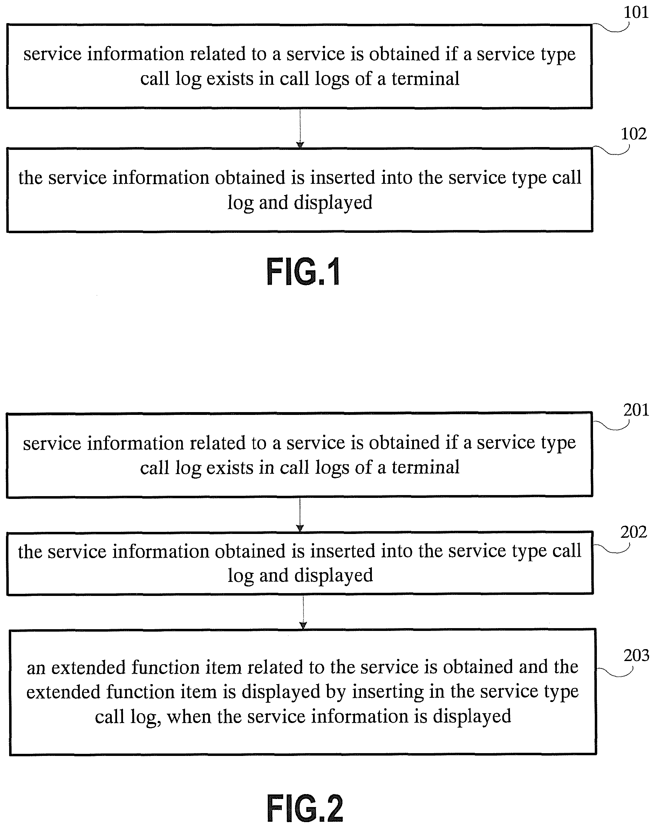

Fig. 1 is a flow chart of a method for processing information according to an embodiment of the present invention. The method for processing information may be applied in a mobile terminal with a communication function, such as a mobile phone. As shown in Fig. 1, the method includes following acts.

At block 101, service information related to a service is obtained if a service type call log exists in call logs of the terminal.

At block 102, the service information obtained is inserted into the service type call log and displayed.

In an embodiment, a new tag is added into the service type call log, and then the obtained service information is inserted into the tag and displayed.

In the technical solution, the service information related to the service is obtained if the service type call log exists in call logs of the terminal and the obtained service information is inserted into the service type call log and displayed, such that a user is allowed to obtain related service information from the call logs without calling other service function to inquire the related service information.

Fig. 2 is a flow chart of a method for processing information according to an embodiment of the present invention. The method for processing information may be applied in a mobile terminal with a communication function, such as a mobile phone. As shown in Fig. 2, the method includes following acts.

At block 201, service information related to a service is obtained if a service type call log exists in call logs of the terminal.

In this technical solution of the present invention, in order to detect whether the service type call log exists in the call logs of the terminal, the call logs are matching recognized by a cloud service (herein, contact information of various services is stored in the cloud service), so as to determine the service provider corresponding to a call log and judge whether the call log belongs to a service type. The service type described herein includes but is not limited to a life service type, such as express delivery service, take-out service, taxi-calling service or ticket-booking service.

At block 202, the obtained service information is inserted into the service type call log and displayed.

In this technical solution of the present invention, the obtained service information is displayed by inserting the obtained service information in the service type call log in a preset layout manner.

In this technical solution of the present invention, the call log corresponding to the service type may be arranged on the top of the call log interface by default if the service corresponding to the call log is in progress. Here, if there are several services are in progress, the call logs corresponding respectively to service types may be displayed from top to bottom on the top of the call log interface in a chronological order according to communication time.

At block 203, an extended function item related to the service is obtained and the extended function item is inserted into the service type call log and displayed, at the same time when the obtained service information is inserted into the service type call log and displayed.

In an embodiment, a new tag is added into the service type call log, and then the obtained extended function item is inserted into the tag and displayed.

In this technical solution of the present invention, the extended function item related to the service refers to a function item provided by the service that can be operated by users. For example, if the service is a taxi-calling service, the extended function item related to this service may be: a payment function, an evaluation function or a service cancelling function. The service and the extended functions related thereto may be bound and stored in advance. Thus, when it is necessary to provide the extended functions corresponding to a service type to a user, the extended functions related to the service may be obtained and provided to the user directly by inquiring the preset setting. In this way, when the user selects to operate the extended function item in the service type call log, the extended function item may be executed. The user may also accomplish several functions in the call log interface.

In conclusion, with the technical solution, the service information related to the service is obtained if the service type call log exists in call logs of a terminal and the obtained service information is inserted into the service type call log and displayed, such that a user is allowed to obtain related service information from the call logs without calling other service function to inquire the related service information.

The implementations of above technical solutions are described in more detail hereinafter by combining with specific application scenarios.

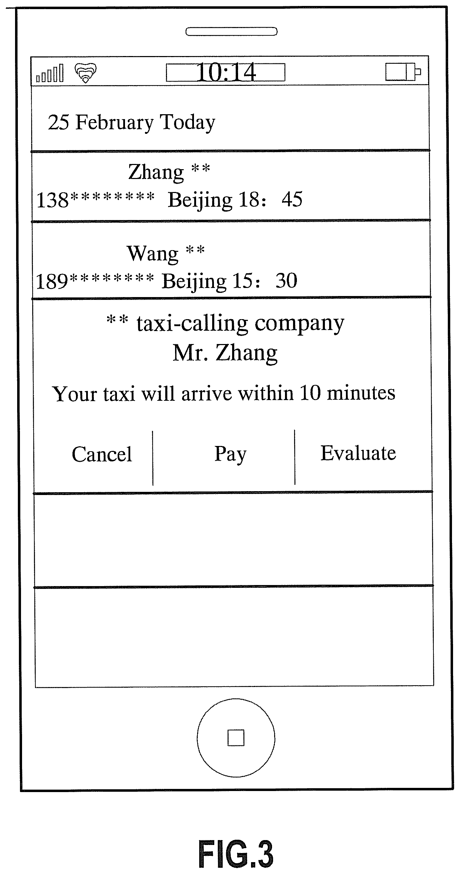

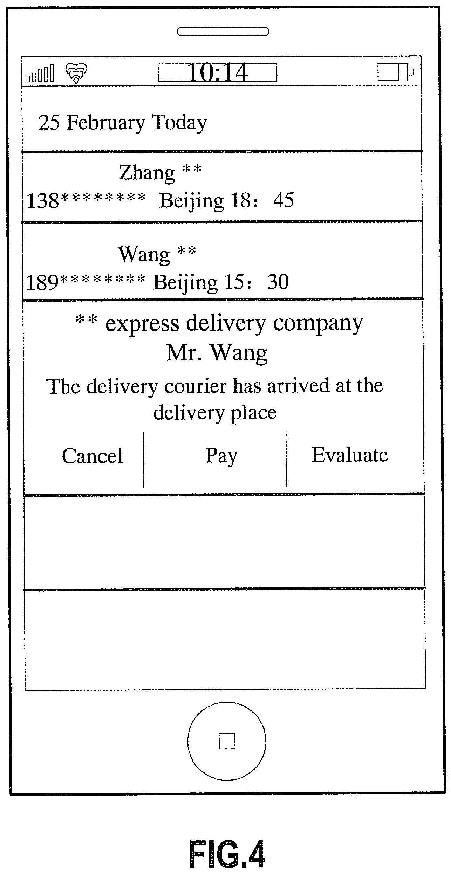

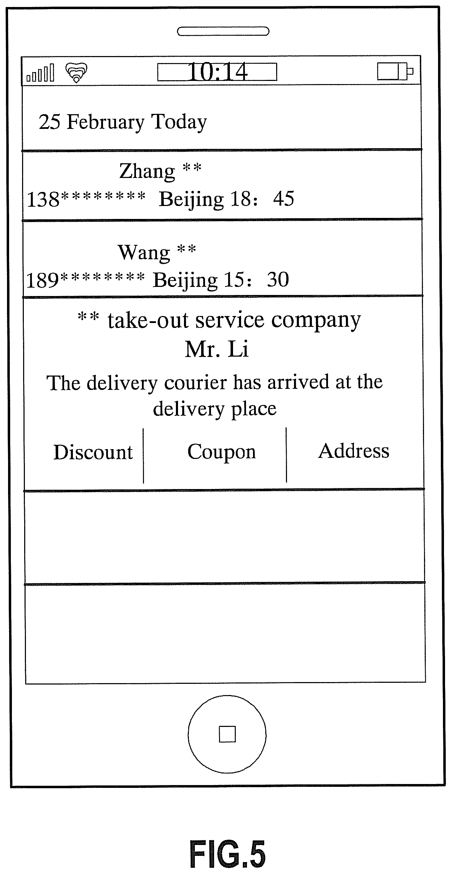

Referring to Figs. 3-5, an information processing process is illustrated exemplary. As shown in Fig. 3, a user A calls a taxi and knows that the called phone number belongs to Mr. Zhang of ^{∗∗} taxi-calling company by matching with the cloud service through the called phone number. Then, the progress information (such as the arrival time) related to the service is may obtained from the background server of ^{∗∗} taxi-calling company according to the call log, and the progress information is displayed in the call log. In a specific implementation, an extended function related to the service, such as service cancelling function, payment and evaluation function, is may obtained and displayed in the call log, so as to allow the user to accomplish the payment function or the service cancelling and evaluation function in the call log interface. As shown in Fig. 4, user A calls Mr. Wang of ^{∗∗} express delivery company and requests for sending a good somewhere. Then, the progress information (such as if arriving at the delivery place or not) related to the service is obtained from the background server of ^{∗∗} express delivery company according to the call log, and the progress information is displayed in the call log. In a specific implementation, an extended function related to the service, such as service cancelling function, payment and evaluation function, is may obtained and displayed in the call log, so as to allow the user to accomplish the payment function or the service cancelling and evaluation function in the call log interface. As shown in Fig. 5, user A calls for a take-out service and knows that the called phone number belongs to Mr. Li of ^{∗∗} take-out service company by matching with the cloud service through the called phone number. Then, the progress information (such as if arriving at the delivery place or not) related to the service is obtained from the background server of ^{∗∗ ∗∗} take-out service company according to the call log, and the progress information is may displayed in the call log. In a specific implementation, an extended function related to the service, such as coupons, address of the restaurant and discount information, is obtained and displayed in the call log, so as to allow the user to obtain coupons, address and discount information in the call log interface.

The device embodiments of the present invention which is may configured to perform the method embodiments of the present invention will be explained below. For the details not disclosed in the device embodiments of the present invention, please refer to the method embodiments of the present invention.

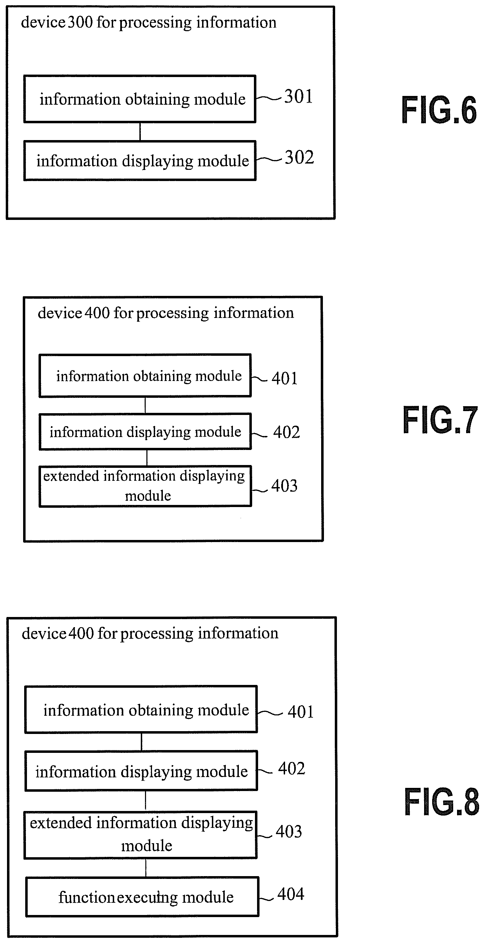

Fig. 6 is a block diagram of a device 300 for processing information according to an embodiment of the present invention. The device 300 for processing information may be implemented as a part or a whole of a terminal by software, hardware of a combination thereof. The terminal may be an electronic displaying device such as a mobile phone. The device 300 for processing information includes an information obtaining module 301, configured to obtain service information related to a service if a service type call log exists in call logs of a terminal; and an information displaying module 302, configured to insert the service information into the service type call log and display the service information.

With the technical solution, the service information related to the service is obtained if the service type call log exists in call logs of a terminal and the obtained service information is inserted into the service type call log and displayed, such that a user is allowed to obtain related service information from the call logs without calling other service function to inquire related service information.

Fig. 7 is a block diagram of a device 400 for processing information according to an embodiment of the present invention. The device 400 for processing information may be implemented as a part or a whole of a terminal by software, hardware of a combination thereof. The terminal is an electronic displaying device such as a mobile phone. The device 400 for processing information includes: an information obtaining module 401, configured to obtain service information related to a service if a service type call log exists in call logs of a terminal; an information displaying module 402, configured to insert the service information into the service type call log and display the service information; and an extended information displaying module 403, configured to obtain an extended function item related to the service, to insert the extended function item into the service type call log and to display the extended function item, when the service information obtained is inserted into the service type call log and displayed.

The information obtaining module 401 is configured to obtain the service information related to the service from a background server, in which the service information at least includes progress information of the service.

As shown in Fig. 8, the device 400 for processing information also includes: a function executing module 404, configured to go to execute the extended function item if a user selects to operate the extended function item in the service type call log.

The service type at least includes: an express delivery service, a take-out service, a taxi-calling service or a ticket-booking service.

The information displaying module 402 may be further configured to arrange a call log corresponding to the service on top of a call log interface by default if the service is in progress.

In conclusion, with the technical solution, the service information related to the service is may obtained if the service type call log exists in call logs of a terminal and the obtained service information is inserted into the service type call log and displayed, such that a user is allowed to obtain related service information from the call logs without calling other service function to inquire related service information.

With respect to the device in the above embodiments, specific manners for respective modules performing operations have been described in detail in related method embodiments and detailed descriptions thereof are omitted herein.

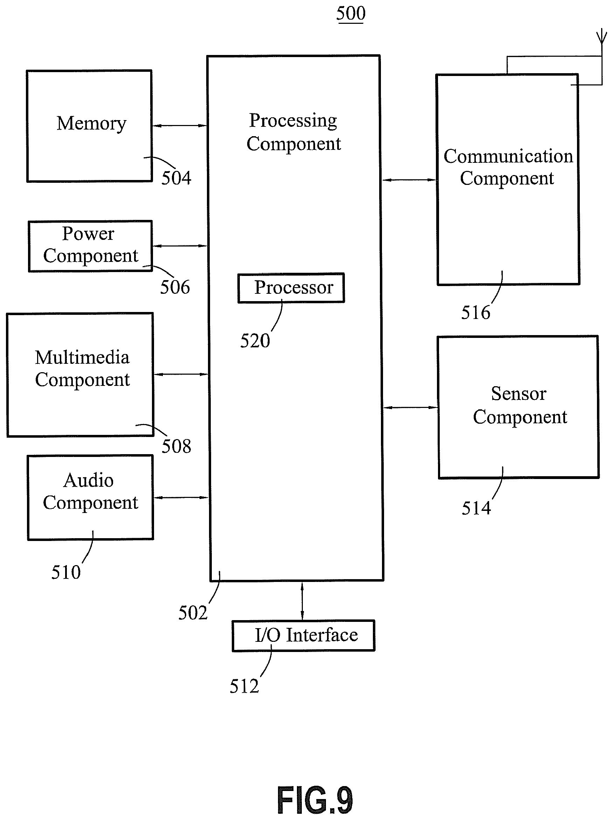

Fig. 9 is a block diagram of a device 500 for processing information according to an embodiment of the present invention. For example, the device 500 may be a terminal such as a mobile phone, a tablet computer or a smart television etc. Referring to Fig. 9, the device 500 includes one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 includes one or more processors 520 to execute instructions to perform all or part of the steps in the above described methods. Moreover, the processing component 502 includes one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor, causes the device 500 to perform the method for processing information.

## Claims

1. A method for processing information, applied in a terminal, comprising:
obtaining (101, 201) service information related to a service if a service type call log exists in call logs of the terminal, wherein the service type call log is a call log corresponding to a service provider and belongs to a service type; and
inserting (102, 202) the service information into the service type call log and displaying the service information;
**characterized in that**,
obtaining (101, 201) the service information related to the service comprises:
obtaining the service information related to the service from a background server, wherein the service information at least comprises progress information of the service; and
the method further comprises:
obtaining (203) an extended function item related to the service;
adding a new tag into the service type call log;
inserting the extended function item into the tag; and
displaying the extended function item when the service information is inserted into the service type call log and displayed, wherein the extended function item is a function item provided by the service that can be operated by a user, and when the user selects to operate the extended function item in the service type call log, the extended function item is executed.

2. The method according to claim 1, further comprising:
going to execute the extended function item if a user selects to operate the extended function item in the service type call log.

3. The method according to claim 1 or 2, wherein the service type at least comprises: an express delivery service, a take-out service, a taxi-calling service or a ticket-booking service.

4. The method according to claim 1, further comprising:
arranging a call log corresponding to the service in an upper part of a call log interface by default if the service is in progress.

5. A device (300,400) for processing information, applied in a terminal, comprising:
an information obtaining module (301,401), configured to obtain service information related to a service if a service type call log exists in call logs of the terminal, wherein the service type call log is a call log corresponding to a service provider and belongs to a service type; and
an information displaying module (302,402), configured to insert the service information into the service type call log and to display the service information;
**characterized in that**,
the information obtaining module (301,401) is further configured to obtain the service information related to the service from a background server, wherein the service information at least comprises progress information of the service; and
the device (300,400) further comprises:
an extended information displaying module (403), configured to obtain an extended function item related to the service, to add a new tag into the service type call log, to insert the extended function item into the tag and to display the extended function item, when the service information obtained is inserted into the service type call log and displayed, wherein the extended function item is a function item provided by the service that can be operated by a user, and when the user selects to operate the extended function item in the service type call log, the extended function item is executed.

6. The device (300,400) according to claim 5, further comprising:
a function executing module (404), configured to go to execute the extended function item if a user selects to operate the extended function item in the service type call log.

7. The device (300,400) according to claim 5 or 6, wherein the service type at least comprises: an express delivery service, a take-out service, a taxi-calling service or a ticket-booking service.

8. The device (300,400) according to claim 5, wherein the information displaying module is further configured to arrange a call log corresponding to the service in an upper part of a call log interface by default if the service is in progress.

9. A computer program including instructions for executing the steps of a method for processing information according to any one of claims 1 to 4 when said program is executed by a computer.

10. A recording medium readable by a computer and having recorded thereon a computer program according to claim 9.

## Patentansprüche

1. Verfahren zum Verarbeiten von Informationen, das in einem Endgerät angewendet wird, umfassend:
Erlangen (101, 201) von Dienstinformationen, die sich auf einen Dienst beziehen, wenn ein Diensttyp-Anrufprotokoll in Anrufprotokollen des Endgeräts vorhanden ist, wobei das Diensttyp-Anrufprotokoll ein Anrufprotokoll ist, das einem Dienstanbieter entspricht und zu einem Diensttyp gehört, und
Einfügen (102, 202) der Dienstinformationen in das Diensttyp-Anrufprotokoll und Anzeigen der Dienstinformationen,
**dadurch gekennzeichnet, dass**
das Erlangen (101, 201) der Dienstinformationen, die sich auf den Dienst beziehen, umfasst:
Erlangen der Dienstinformationen, die sich auf den Dienst beziehen, von einem Hintergrundserver, wobei die Dienstinformationen mindestes Fortschrittsinformationen des Dienstes umfassen, und
das Verfahren ferner umfasst:
Erlangen (203) eines erweiterten Funktionselements, das sich auf den Dienst bezieht,
Hinzufügen eines neuen Auszeichners zu dem Diensttyp-Anrufprotokoll,
Einfügen des erweiterten Funktionselements in den Auszeichner, und
Anzeigen des erweiterten Funktionselements, wenn die Dienstinformationen in das Diensttyp-Anrufprotokoll eingefügt und angezeigt werden, wobei das erweiterte Funktionselement ein Funktionselement ist, das durch den Dienst bereitgestellt wird und von einem Benutzer betrieben werden kann, und, wenn der Benutzer auswählt, das erweiterte Funktionselement in dem Diensttyp-Anrufprotokoll zu betreiben, das erweiterte Funktionselement ausgeführt wird.

2. Verfahren nach Anspruch 1, ferner umfassend:
Beginnen mit Ausführen des erweiterten Funktionselements, wenn ein Benutzer auswählt, das erweiterte Funktionselement in dem Diensttyp-Anrufprotokoll zu betreiben.

3. Verfahren nach Anspruch 1 oder 2, wobei der Diensttyp mindestens umfasst:
einen Expresslieferungs-Dienst, einen Mitnahmedienst, einen Taxianruf-Dienst oder einen Ticketbuchungs-Dienst.

4. Verfahren nach Anspruch 1, ferner umfassend:
standardmäßiges Anordnen eines Anrufprotokolls, das dem Dienst entspricht, in einem oberen Teil einer Anrufprotokoll-Schnittstelle, wenn der Dienst durchgeführt wird.

5. Vorrichtung (300, 400) zum Verarbeiten von Informationen, das in einem Endgerät angewendet wird, umfassend:
ein Informationserlangungs-Modul (301, 401), das dazu ausgestaltet ist, Dienstinformationen zu erlangen, die sich auf einen Dienst beziehen, wenn ein Diensttyp-Anrufprotokoll in Anrufprotokollen des Endgeräts vorhanden ist, wobei das Diensttyp-Anrufprotokoll ein Anrufprotokoll ist, das einem Dienstanbieter entspricht und zu einem Diensttyp gehört, und
ein Informationsanzeige-Modul (302, 402), das dazu ausgestaltet ist, die Dienstinformationen in das Diensttyp-Anrufprotokoll einzufügen und die Dienstinformationen anzuzeigen,
**dadurch gekennzeichnet, dass**
das Informationserlangungs-Modul (301, 401) ferner dazu ausgestaltet ist, die Dienstinformationen, die sich auf den Dienst beziehen, von einem Hintergrundserver zu erlangen, wobei die Dienstinformationen mindestes Fortschrittsinformationen des Dienstes umfassen, und
die Vorrichtung (300, 400) ferner umfasst:
ein Anzeigemodul (403) für erweiterte Informationen, das dazu ausgestaltet ist, ein erweitertes Funktionselement zu erlangen, das sich auf den Dienst bezieht, einen neuen Auszeichner zu dem Diensttyp-Anrufprotokoll hinzuzufügen, das erweiterte Funktionselement in den Auszeichner einzufügen und das erweiterte Funktionselement anzuzeigen, wenn die erlangten Dienstinformationen in das Diensttyp-Anrufprotokoll eingefügt und angezeigt werden, wobei das erweiterte Funktionselement ein Funktionselement ist, das durch den Dienst bereitgestellt wird und von einem Benutzer betrieben werden kann, und, wenn der Benutzer auswählt, das erweiterte Funktionselement in dem Diensttyp-Anrufprotokoll zu betreiben, das erweiterte Funktionselement ausgeführt wird.

6. Vorrichtung (300, 400) nach Anspruch 5, ferner umfassend:
ein Funktionsausführungs-Modul (404), das dazu ausgestaltet ist, mit dem Ausführen des erweiterten Funktionselements zu beginnen, wenn ein Benutzer auswählt, das erweiterte Funktionselement in dem Diensttyp-Anrufprotokoll zu betreiben.

7. Vorrichtung (300, 400) nach Anspruch 5 oder 6, wobei der Diensttyp mindestens umfasst: einen Expresslieferungs-Dienst, einen Mitnahmedienst, einen Taxianruf-Dienst oder einen Ticketbuchungs-Dienst.

8. Vorrichtung (300, 400) nach Anspruch 5, wobei das Informationsanzeige-Modul ferner dazu ausgestaltet ist, ein Anrufprotokoll, das dem Dienst entspricht, standardmäßig in einem oberen Teil einer Anrufprotokoll-Schnittstelle anzuordnen, wenn der Dienst durchgeführt wird.

9. Computerprogramm, das Anweisungen zum Ausführen der Schritte eines Verfahrens zum Verarbeiten von Informationen nach einem der Ansprüche 1 bis 4 beinhaltet, wenn das Programm von einem Computer ausgeführt wird.

10. Aufzeichnungsmedium, das von einem Computer gelesen werden kann und auf dem ein Computerprogramm nach Anspruch 9 aufgezeichnet ist.

## Revendications

1. Procédé pour le traitement d'informations, appliqué dans un terminal, comprenant :
l'obtention (101, 201) d'informations de service se rapportant à un service si un journal des appels de type de service existe dans des journaux des appels du terminal, dans lequel le journal des appels de type de service est un journal des appels correspondant à un fournisseur de services et appartient à un type de service ; et
l'insertion (102, 202) des informations de service dans le journal des appels de type de service et l'affichage des informations de service ;
**caractérisé en ce que**,
l'obtention (101, 201) des informations de service se rapportant au service comprend :
l'obtention des informations de service se rapportant au service à partir d'un serveur d'arrière-plan, dans lequel les informations de service comprennent au moins des informations de progression du service ; et
le procédé comprend en outre :
l'obtention (203) d'un élément de fonction étendue se rapportant au service ;
l'ajout d'une nouvelle étiquette dans le journal des appels de type de service ;
l'insertion de l'élément de fonction étendue dans l'étiquette ; et
l'affichage de l'élément de fonction étendue lorsque les informations de service sont insérées dans le journal des appels de type de service et affichées, dans lequel l'élément de fonction étendue est un élément de fonction fourni par le service qui peut être exploité par un utilisateur, et lorsque l'utilisateur sélectionne d'exploiter l'élément de fonction étendue dans le journal des appels de type de service, l'élément de fonction étendue est exécuté.

2. Procédé selon la revendication 1, comprenant en outre :
l'intention d'exécuter l'élément de fonction étendue si un utilisateur sélectionne d'exploiter l'élément de fonction étendue dans le journal des appels de type de service.

3. Procédé selon la revendication 1 ou 2, dans lequel le type de service comprend au moins : un service de livraison rapide, un service à emporter, un service d'appel de taxi ou un service de réservation de billets.

4. Procédé selon la revendication 1, comprenant en outre :
l'agencement d'un journal des appels correspondant au service dans une partie supérieure d'une interface de journal des appels par défaut si le service est en cours de progression.

5. Dispositif (300, 400) pour le traitement d'informations, appliqué dans un terminal, comprenant :
un module d'obtention d'informations (301, 401), configuré pour obtenir des informations de service se rapportant à un service si un journal des appels de type de service existe dans des journaux des appels du terminal, dans lequel le journal des appels de type de service est un journal des appels correspondant à un fournisseur de services et appartient à un type de service ; et
un module d'affichage d'informations (302, 402), configuré pour insérer les informations de service dans le journal des appels de type de service et pour afficher les informations de service ;
**caractérisé en ce que**,
le module d'obtention d'informations (301, 401) est en outre configuré pour obtenir les informations de service se rapportant au service à partir d'un serveur d'arrière-plan, dans lequel les informations de service comprennent au moins des informations de progression du service ; et
le dispositif (300, 400) comprend en outre :
un module d'affichage d'informations étendues (403), configuré pour obtenir un élément de fonction étendue se rapportant au service, pour ajouter une nouvelle étiquette dans le journal des appels de type de service, pour insérer l'élément de fonction étendue dans l'étiquette et pour afficher l'élément de fonction étendue, lorsque les informations de service obtenues sont insérées obtenir dans le journal des appels de type de service et affichées, dans lequel l'élément de fonction étendue est un élément de fonction fourni par le service qui peut être exploité par un utilisateur, et lorsque l'utilisateur sélectionne d'exploiter l'élément de fonction étendue dans le journal des appels de type de service, l'élément de fonction étendue est exécuté.

6. Dispositif (300, 400) selon la revendication 5, comprenant en outre :
un module d'exécution de fonction (404), configuré pour avoir l'intention d'exécuter l'élément de fonction étendue si un utilisateur sélectionne d'exploiter l'élément de fonction étendue dans le journal des appels de type de service.

7. Dispositif (300, 400) selon la revendication 5 ou 6, dans lequel le type de service comprend au moins : un service de livraison rapide, un service à emporter, un service d'appel de taxi ou un service de réservation de billets.

8. Dispositif (300, 400) selon la revendication 5, dans lequel le module d'affichage d'informations est en outre configuré pour agencer un journal des appels correspondant au service dans une partie supérieure d'une interface de journal des appels par défaut si le service est en cours de progression.

9. Programme d'ordinateur incluant des instructions pour l'exécution des étapes d'un procédé pour le traitement d'informations selon l'une quelconque des revendications 1 à 4 lorsque ledit programme est exécuté par un ordinateur.

10. Support d'enregistrement lisible par un ordinateur et ayant, enregistré sur celui-ci, un programme d'ordinateur selon la revendication 9.
